# EUROPÄISCHE PATENTSCHRIFT

(11) **EP 3 221 029 B1**
(45) Veröffentlichungstag und Bekanntmachung des Hinweises auf die Patenterteilung: **11.09.2019**
(21) Anmeldenummer: 15798358.6
(22) Anmeldetag: 13.11.2015
(51) Int. Cl.: B01D 53/04, B01D 53/26, B60T 17/00, F26B 21/08

(54) **TROCKENMITTELPATRONE**
DESICCANT CARTRIDGE
CARTOUCHE D'AGENT DESSICATEUR

(30) Priorität: 17.11.2014 DE 102014116804
(43) Veröffentlichungstag der Anmeldung: 27.09.2017
(73) Patentinhaber: KNORR-BREMSE Systeme für Nutzfahrzeuge GmbH, 80809 München (DE)
(72) Erfinder: SCHNITTGER, Karsten, 80935 München (DE)
(86) Internationale Anmeldenummer: PCT/EP2015/076496
(87) Internationale Veröffentlichungsnummer: WO 2016/079010

(56) Entgegenhaltungen:
- WO-A1-2009/043427
- DE-A1- 19 645 009
- US-A- 5 002 596

## Beschreibung

Die vorliegende Erfindung bezieht sich auf eine Trockenmittelpatrone und insbesondere auf eine Lufttrocknerpatrone mit Trockenmittel und elastischen Elementen für einen Lufttrockner.

### Hintergrund

Trockenmittelpatronen kommen in Lufttrockner zum Einsatz und sind in vielen technischen Gebieten anzutreffen. So benötigen beispielsweise Druckluftsysteme trockene und saubere Luft, erzeugen aber auf der anderen Seite Kondensationsfeuchtigkeit durch die im System vorhandenen plötzlichen Druckänderungen. Um beispielsweise diese Kondensationsfeuchtigkeit effizient und schnell der Luft zu entziehen, werden Trockenmittelpatronen genutzt, wobei die Trockenmittelpatrone optional eine Filterung oder Reinigung aufweist, um der Luft ebenfalls Schutz und Ölreste zu entziehen.

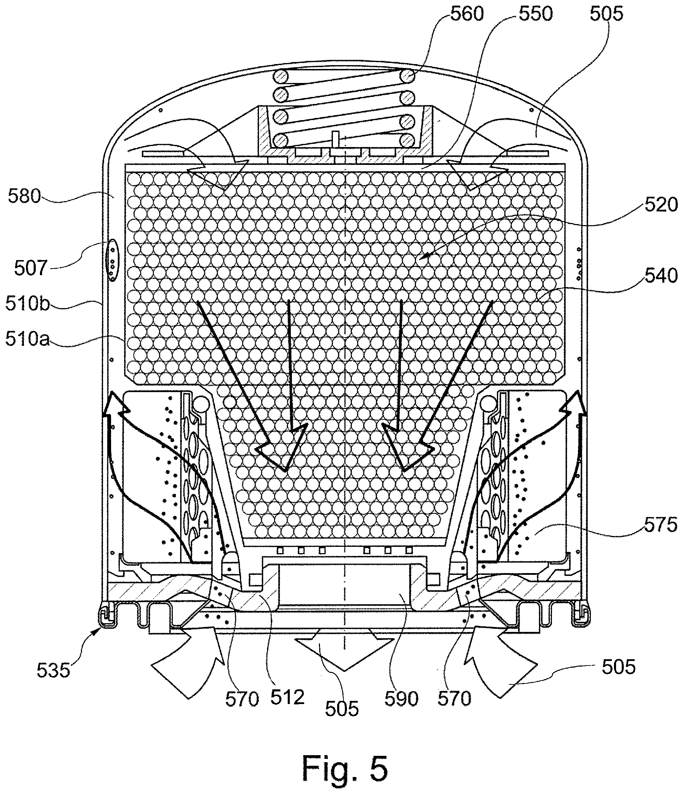

Fig. 5 zeigt ein Beispiel für eine konventionelle Trockenmittelpatrone. Diese Trockenmittelpatrone besteht aus einem Gehäuse, welches ein Innengehäuse 510a und ein Außengehäuse 510b aufweist, die übereinander angeordnet sind und an einem Unterbau 512 durch Fixierungsmittel 535 aneinander befestigt sind. Der durch das Innengehäuse 510a gebildete Innenraum 520 beherbergt Trockenmittel 540, welches von oben durch eine luftdurchlässige Abdeckung 550 abgedeckt wird und nach unten durch den Unterbau 512 gehalten wird. Das Trockenmittel 540 wird dabei mittels einer Feder 560, die eine Federkraft zwischen dem Außengehäuse 510b und der durchlässigen Abdeckung 550 bereitstellt, unter eine Vorspannung gesetzt. Außerdem weist der Unterbau 512 einen Einlass 570 und einen Auslass 590 auf, wobei der Auslass 590 zentral angeordnet ist und ein oder mehrere Einlässe 570 in einem peripheren Bereich um den Auslass 590 herum angeordnet sind.

Einströmende Luft 505 gelangt durch den Einlass 570 in den Raum zwischen dem Innengehäuse 510a und dem Außengehäuse 510b, wobei die einströmende Luft 505 zunächst eine Filtereinheit 575 passiert. Die einströmende Luft 505 weist eine gewisse Menge an Luftfeuchtigkeit auf, die beispielsweise als kleine Wassertropfen 507 vorliegen kann. Anschließend gelangt die Luft in einen Seitenkanal 580 zwischen dem Innengehäuse 510a und dem Außengehäuse 510b. Schließlich strömt die Luft 505 nach einem Passieren der luftdurchlässigen Abdeckung 550 in einen oberen Bereich des Innenraumes 520 ein und gelangt zu dem Trockenmittel 540. Bei dem Durchströmen des Trockenmittels 540 wird der Luft 505 die Luftfeuchtigkeit durch das Trockenmittel 540 entzogen. Schließlich strömt die Luft 505 in Richtung zu dem Unterbau 512, wo es über Öffnungen in dem Unterbau 512 den Innenraum 520 verlässt und durch den Auslass 590 ausströmt.

Die Filtereinheit 575 erfüllt die Aufgabe, Verschmutzungen aus der einströmenden Luft zu entfernen. Die Verschmutzungen können beispielsweise Ölpartikel oder Ölreste umfassen, die die Arbeitsweise des Trockenmittels 520 beeinträchtigen würden. Beispielsweise kann das Trockenmittel 540 aus einer Vielzahl von Kugeln bestehen, sodass sich die Zwischenräume zwischen den Trockenmittelkugeln durch die Verschmutzungen zusetzen könnten oder das Trockenmittel 540 selbst deaktiviert werden würde.

Da die Feder 560 einen Druck auf die Abdeckplatte 550 ausübt, wird das Trockenmittel 540 zusammengedrückt und das Trockenmittel 540 ist somit fest im Innenraum 520 fixiert und kann sich nicht aneinander reiben. Für den Fall, dass das Trockenmittel 540 aus einer Vielzahl von kleinen Kugeln besteht, unterdrückt die Feder 560 ein Bewegen der Trockenmittelkugel untereinander, was zu einem Abrieb führen würde, der als Staub die Zwischenräume zwischen den Trockenmittelkugeln zusetzen könnte. Ein solches "Zusetzen" hätte u.a. zur Folge, dass der aufzuwendende Druck für die Luft beim Passieren der Trockenmittelpatrone mit der Zeit erhöht werden müsste. Eine solche Trockenmittelpatrone ist beispielsweise in der WO2009/043427 offenbart.

Ein Nachteil der konventionellen Trockenmittelpatrone besteht jedoch darin, dass der Raum zwischen der Abdeckplatte 550 und dem äußeren Gehäuse 510b einen Leerraum darstellt, der die Feder 560 aufnimmt - jedoch nicht der Lufttrocknung dient.

US 5,002,596 A offenbart einen Kraftstoffdampfspeicherbehälter mit einer großen Anzahl von Aktivkohleteilchen, um Kraftstoffdämpfe zu adsorbieren. In dem Behälter sind außerdem viele Teilchen aus Schaumgummi gleichmäßig verteilt, um eine Volumenreduktion der Aktivkohle mit der Zeit zu kompensieren. Die DE 196 45 009 A1 offenbart einen weiteren bekannten Behälter einer Trocknungsanlage mit Adsorptionsmitteln.

Der vorliegenden Erfindung liegt daher die Aufgabe zugrunde, eine Trockenmittelpatrone zu schaffen, die den Innenraum des Gehäuses besser zur Lufttrocknung ausnutzt.

### Zusammenfassung

Die oben genannte Aufgabe wird durch eine Trockenmittelpatrone nach Anspruch 1 und ein Verfahren zur Herstellung einer Trockenmittelpatrone nach Anspruch 12 gelöst. Die abhängigen Ansprüche beziehen sich auf vorteilhafte Weiterbildungen der Gegenstände der unabhängigen Ansprüche.

Die vorliegende Erfindung bezieht sich auf eine Trockenmittelpatrone zum Trocknen von Luft. Die Trockenmittelpatrone umfasst: ein Gehäuse, Trockenmittel und elastische Elemente. Das Gehäuse bildet einen Innenraum. Das Trockenmittel füllt unvollständig den Innenraum aus und lässt einen Teil des Innenraumes frei. Die elastischen Elemente füllen den freigelassenen Teil des Innenraums derart, dass das Trockenmittel unter einer Vorspannung sich im Innenraum befindet.

Die oben genannte Aufgabe wird durch die Erfindung dadurch gelöst, dass die elastischen Elemente eine Vorspannung auf das Trockenmittel derart ausübt, dass eine Reibung zwischen dem Trockenmittel unterdrückt wird, und somit ein Abrieb nicht entstehen kann.

Im Rahmen der vorliegenden Erfindung ist der Begriff "elastische Elemente" weit auszulegen und bezieht sich auf alle Elemente, die sich unter Druckeinwirkung elastisch verformen und dabei einen Gegendruck ausüben, der die Vorspannung liefert. Ebenso soll der Begriff freigelassene Teil derart ausgelegt werden, dass er sich nicht notwendigerweise auf den gesamten nicht-ausgefüllten Innenraum bezieht, sondern nur einen Teil davon umfasst. Beispielsweise bleiben zwischen den elastischen Elementen und zwischen den Trockenmittel-Teilchen immer noch kleine Zwischenräume frei. Daher ist der freigelassene Teil lediglich ein Teil des nicht-ausgefüllten Innenraums.

Das Gehäuse umfasst ein Innengehäuse und ein Außengehäuse, wobei das Innengehäuse und das Außengehäuse unter Spannung miteinander fixiert sind und die Spannung durch die elastischen Elemente verursacht wird. Beispielsweise sind die elastischen Elemente (überwiegend oder zumindest ein Teil davon) in dem Innenraum auf der Seite des Lufteinlasses und das Trockenmittel (überwiegend oder zumindest ein Teil davon) auf der Seite des Luftauslasses angeordnet.

Die Trockenmittelpatrone umfasst ein luftdurchlässiges und/oder elastisches Abdeckelement, wobei das Abdeckelement zwischen dem Außengehäuse und den elastischen Elementen und/oder dem Trockenmittel derart angeordnet ist, dass bei einem Entfernen des Außengehäuses das Abdeckelement zumindest einem Teil der elastischen Elemente und/oder des Trockenmittels Halt bietet. Damit wird erreicht, dass die elastischen Elemente und/oder das Trockenmittel in dem Innenraum verbleiben, d.h. auch wenn diese hervorstehen (als Berg beispielsweise), werden sie zusammen gehalten und können nicht herausfallen.

In weiteren Ausführungsbeispielen kann das optionale elastische Abdeckelement als ein Tuch oder ein Netz oder ein luftdurchlässiges Gewebe gebildet sein, welches eine Vielzahl von Öffnungen aufweist, die beispielsweise derart gewählt sind, dass zwar Luft leicht durchgelassen wird, die elastischen Elemente und das Trockenmittel jedoch zuverlässig zurückgehalten werden. Das elastische Abdeckelement bietet insbesondere Vorteile bei der Herstellung, indem zunächst das Innengehäuse mit Trockenmitteln und den elastischen Elementen gefüllt werden kann (bspw. als ein Berg aufgeschüttet sein kann) und daran anschließend das elastische Abdeckelement aufgebracht wird, so dass die elastischen Elemente nicht entweichen können und das Außengehäuse ohne Probleme, trotz der vorhandenen elastischen Elemente, leicht auf dem Innengehäuse fixierbar ist.

Nach dem Zusammenbau kann sich das elastische Abdeckelement beispielsweise im Innenraum zwischen dem Außengehäuse und dem Innengehäuse befinden. Das Abdeckelement kann ebenfalls hülsenartig oder strumpfartig ausgebildet sein, sodass es sich entlang einer Innenwand des Innengehäuses erstreckt (und so den Innenraum vergrößert) und oben eine Öffnung aufweist, durch welche das Trockenmittel und die elastischen Elemente eingefüllt werden können. Durch anschließendes Umklappen kann das Abdeckelement den Innenraum verschließen, und das Außengehäuse kann ohne Problem auf dem Innengehäuse fixiert werden. Daher kann in weiteren Ausführungsbeispielen das Abdeckelement an einer Innenwand oder Außenwand des Innengehäuses (mehr oder weniger eng) anliegen und durch ein elastisches Gewebe oder Tuch (oder Netz) gebildet sein. Der Zusatz "Innen" und "Außen" ist so zu verstehen, dass sich "Innen" auf eine Richtung hin zu dem Trockenmittel bezieht (das im Innenraum ist) und "Außen" sich auf eine Richtung hin zu dem Außengebiet außerhalb der Trockenmittelpatrone bezieht.

In weiteren Ausführungsbeispielen können die elastischen Elemente ein Schaumstoffmaterial aufweisen und ausgebildet sein, um Luft zu filtern. Daher kann die Region mit den elastischen Elementen gleichzeitig als eine Filtereinheit dienen, die Verunreinigungen aus der Luft filtert. Die Verunreinigungen können beispielsweise kleine Teilchen, aber auch Ölrückstände oder andere störende Stoffe umfassen.

In weiteren Ausführungsbeispielen können die elastischen Elemente ein hydrophiles Material aufweisen.

In weiteren Ausführungsbeispielen können zumindest Teile der elastischen Elemente Hohlräume aufweisen, wobei in zumindest einigen Hohlräumen (nach dem Einbau) ein Druck oberhalb eines Umgebungsdruckes herrscht, um die Vorspannung zu liefern. Beispielsweise können die elastischen Elemente als Kunststoffluftblasen ausgebildet sein, so dass sie sich leicht beim Zusammensetzen des Innen- und Außengehäuses deformieren und so die Vorspannung liefern. Es kann auch vorgesehen sein, dass einige der Luftblasen platzen können, sodass einerseits eine leichte Montage möglich wird und andererseits die Vorspannung einen oberen Grenzwert nicht überschreitet. Damit ist der Vorspannungsdruck durch die Deformierbarkeit der blasenförmigen elastischen Elemente flexibel einstellbar.

In weiteren Ausführungsbeispielen kann zumindest ein Luftströmungspfad in der Trockenmittelpatrone zum Trocken der Luft ausgebildet sein, wobei der Luftströmungspfad einen ersten Abschnitt durch die elastischen Elemente und einen zweiten Abschnitt durch das Trockenmittel umfasst. Die elastischen Elemente können eine Größe oder eine Form aufweisen, die derart gewählt ist, dass ein Strömungsquerschnitt für die Luft entlang des ersten Abschnittes größer ist als ein Strömungsquerschnitt für die Luft entlang des zweiten Abschnittes (oder beide sind gleich). Damit wird erreicht, dass die Luft möglichst ungehindert den Bereich mit den elastischen Elementen passieren kann und der Luftwiderstand (hauptsächlich) durch das Trockenmittel verursacht wird. Somit brauchen herkömmliche Anlagen, die auf einen vorbestimmten Luftdruck basieren, nicht umgerüstet werden.

In weiteren Ausführungsbeispielen kann zumindest ein Teil der elastischen Elemente durch ein Packungsmaterial verpackt sein, wobei Packungsmaterial alle Mittel umfassen kann, die geeignet sind, eine Vielzahl von elastischen Elementen zusammen zu halten oder miteinander zu verbinden. Als eine einfache Möglichkeit können die elastischen Elemente in ein Netz oder Tuch gewickelt werden. In weiteren Ausführungsbeispielen kann ein luftdurchlässiges Trennelement vorhanden sein, welches das Trockenmittel von den elastischen Elementen trennt, wobei das Trennelement optional Teil des Packungsmaterials sein kann. In anderen Ausführungsbeispielen können die elastischen Elemente mit dem Trockenmittel aber auch zumindest teilweise vermischt sein.

Optional kann das Innengehäuse oder das Außengehäuse einen Unterbau aufweisen, der dazu dient, das Innengehäuse mit dem Außengehäuse unter Spannung miteinander zu verbinden und gleichzeitig einen Luftauslass und einen Lufteinlass bietet.

Die vorliegende Erfindung bezieht sich auch auf ein Verfahren zum Herstellen einer Trockenmittelpatrone. Das Verfahren umfasst die folgenden Schritte: Bereitstellen eines Innengehäuses und eines Außengehäuses, wobei das Innengehäuse einen Innenraum bildet; Füllen des Innenraumes mit einem Trockenmittel; Füllen des Innenraumes mit elastischen Elementen; und Schließen des Innenraumes mit dem Außengehäuse. Das Füllen des Innenraumes mit elastischen Elementen wird derart ausgeführt, dass beim Schließen mit dem Außengehäuse ein Druck auf die elastischen Elemente ausgeübt wird, sodass das Trockenmittel zusammen mit den elastischen Elementen unter Vorspannung sich in dem Innenraum befindet.

Die genannte Reihenfolge der Schritte impliziert keine zeitliche Abfolge oder nur insoweit, wie es zwingend erforderlich ist. Beispielweise kann Trockenmittel vor oder nach oder gleichzeitig mit den elastischen Elementen eingefüllt werden. Es kann auch eine Mischung von Trockenmittel und elastischen Elementen gleichzeitig eingefüllt werden, ohne dass zwei separate Schritte umfasst sind.

In weiteren Ausführungsbeispielen kann der Schritt des Füllens des Innenraumes mit Trockenmittel und/oder mit elastischen Mitteln ein Bilden eines Berges umfassen, der sich aus dem Innenraum heraus erhebt. In diesem Fall kann das Verfahren weiter den Schritt eines Abdeckens des Berges von Trockenmittel und/oder elastischen Elementen mit einem Abdeckelement umfassen, sodass das Trockenmittel und/oder die elastischen Elementen im Innenraum gehalten werden, während der Innenraum mit dem Außengehäuse vorschlossen wird.

### Kurzbeschreibung der Figuren

Die Ausführungsbeispiele der vorliegenden Erfindung werden besser verstanden von der folgenden detaillierten Beschreibung und den beiliegenden Zeichnungen der unterschiedlichen Ausführungsbeispielen, die jedoch nicht so verstanden werden sollten, dass sie die Offenbarung auf die spezifischen Ausführungsbeispielen einschränkt, sondern lediglich der Erklärung und dem Verständnis dienen.
- Fig. 1: zeigt eine Trockenmittelpatrone zum Trocknen von Luft entlang eines Luftströmungspfades gemäß einem Ausführungsbeispiel der vorliegenden Erfindung.
- Fig. 2: zeigt weitere optionale Details der Trockenmittelpatrone gemäß weiterer Ausführungsbeispiele.
- Fig. 3: zeigt ein weiteres Ausführungsbeispiel für eine Trockenmittelpatrone.
- Fig. 4: zeigt ein Flussdiagramm für ein Verfahren gemäß einem Ausführungsbeispiel.
- Fig. 5: zeigt eine konventionelle Trockenmittelpatrone.

### Detaillierte Beschreibung

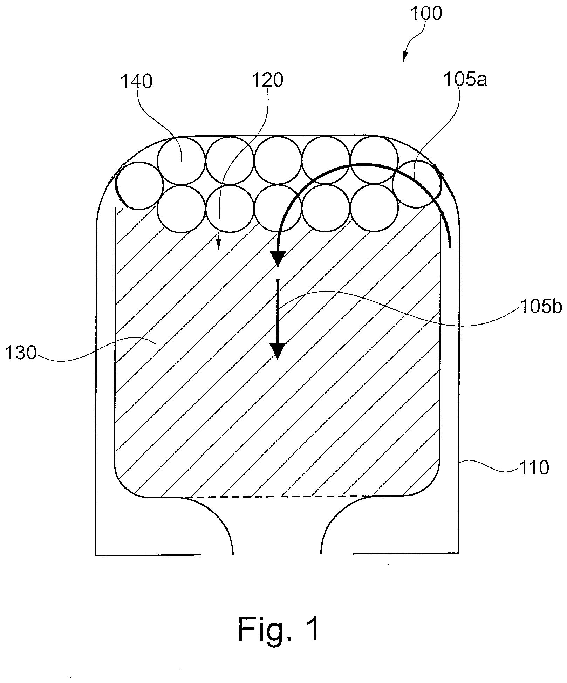

Fig. 1 zeigt eine Trockenmittelpatrone 100 zum Trocknen von Luft entlang eines Luftströmungspfades 105a, 105b gemäß einem Ausführungsbeispiel der vorliegenden Erfindung. Die Trockenmittelpatrone 100 umfasst ein Gehäuse 110 mit einem Innenraum 120, Trockenmittel 130 und elastische Elemente 140. Das Trockenmittel 130 füllt den Innenraum 120 nur unvollständig aus und lässt einen Teil des Innenraumes 120 frei. Die elastischen Elemente 140 füllen den freigelassenen Teil des Innenraums 120 derart, dass das Trockenmittel 130 unter einer Vorspannung sich im Innenraum 120 befindet. Die Fig. 1 gibt nur eine schematische Ansicht, bei der die Deformationen der elastischen Elemente 140 nicht sichtbar sind.

Bei dem gezeigten Ausführungsbeispiel umfasst der Strömungspfad der Luft wenigstens zwei Abschnitte: einen ersten Strömungsabschnitt 105a durch die elastischen Elemente 140 und einen zweiten Strömungsabschnitt 105b durch das Trockenmittel 130.

Bei weiteren Ausführungsbeispielen ist der erste Strömungsabschnitt 105a gleich dem zweiten Strömungsabschnitt 105b, da das Trockenmittel 130 und die elastischen Elemente 140 miteinander vermischt sein können und der Strömungspfad 105 der Luft durch ein gemeinsames Gemisch verläuft.

Die vorliegende Erfindung betrifft somit insbesondere ein Trockenmittel 130, welches elastische Elemente 140 aufweist, die entweder in dem Trockenmittel 130 oder direkt auf dem Trockenmittel 130 vorgesehen sind, um eine Vorspannung für das Trockenmittel 130 bereitzustellen. Die elastischen Elemente 140 können beispielsweise (harte) Schaumstoffschnitzel sein, die eventuell auch noch eine Vorfilterfunktion übernehmen können. Eine weitere Möglichkeit besteht darin, dass die elastischen Elemente 140 teilweise oder ganz wie Luftpolsterfolien gebildet sind, um so den Zusammenbau der Lufttrockenpatrone 100 zu erleichtern. Beispielsweise können einige elastischen Elemente 140 bei der Montage platzen, um so einen vorbestimmten Druck in der Trockenmittelpatrone 100 nicht zu überschreiten.

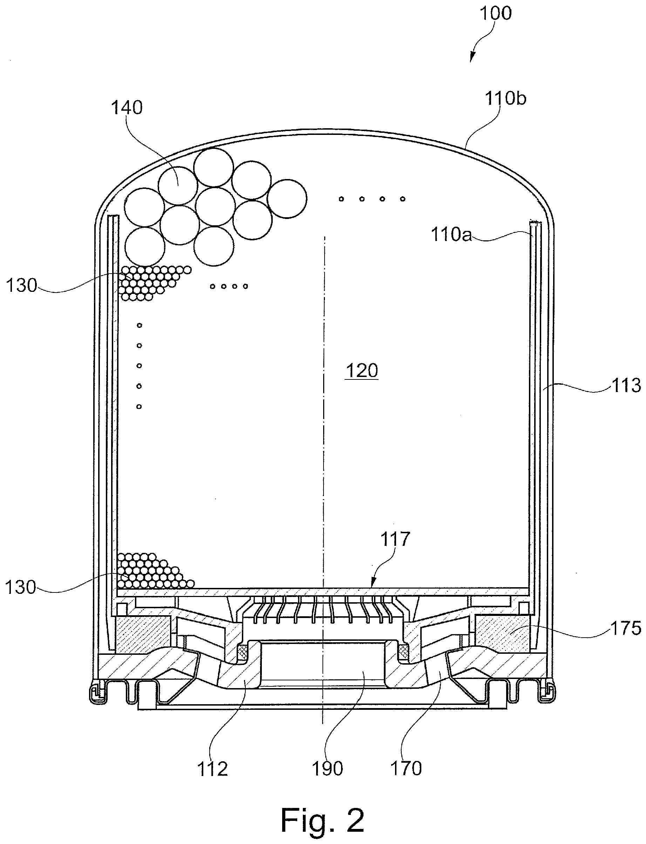

Fig. 2 zeigt weitere optionale Details der Trockenmittelpatrone 100 gemäß weiterer Ausführungsbeispiele der vorliegenden Erfindung. Bei dem gezeigten Ausführungsbeispiel sind mehrere Teile ähnlich oder identisch ausgebildet zu der konventionellen Trockenmittelpatrone, wie sie mit der Fig. 5 beschrieben wurde. So besteht das Gehäuse 110 wiederum aus einem Innengehäuse 110a und einem Außengehäuse 110b, die übereinander angeordnet sind (z.B. übereinander geschoben sind) und über einen Unterbau 112, der beispielsweise Teil des Innengehäuses 110a sein kann, miteinander befestigt sind. An dem Unterbau 112 ist zentral ein Auslass 190 und in einem peripheren Bereich ein oder mehrere Einlässe 170 vorgesehen sein. Die zumindest zwei Einlässe 170 können Teil eines einzigen Einlasses 170 sein, der sich peripher um den Auslass 190 herum erstrecken kann.

Die Luft kann beispielsweise durch einen der Einlässe 170 in die Trockenmittelpatrone 100 eintreten und gelangt nach dem Einlass 170 zu einer Filtereinheit 175 (z.B. ein Koaleszenzfilter). Die Filtereinheit 175 ist beispielsweise ausgebildet, um eine Vorfilterung vorzunehmen (beispielsweise eine Filterung hinsichtlich von Verschmutzungen oder Ölrückständen). Nach der Filtereinheit 175 gelangt die Luft in einem Zwischenkanal 113 zwischen dem Innengehäuse 110a und dem Außengehäuse 110b. Die Luft passiert den Zwischenkanal 113 hin zu einem oberen Abschnitt der Trockenmittelpatrone 100 (entgegengesetzt zu dem Unterbau 112), wo der Zwischenkanal 113 in den Innenraum 120 übergeht.

In dem Innenraum 120 ist Trockenmittel 130 angeordnet und vertikal darüber befinden sich die elastischen Elemente 140, so dass die einströmende Luft nach dem Passieren des Zwischenkanals 113 zunächst zu den elastischen Elementen 140 gelangt. Die elastischen Elemente 140 bauen wiederum eine Vorspannung zwischen dem Trockenmittel 130 im Innenraum 120 und dem Gehäuse 110 (oder einem Deckelabschnitt davon) auf.

Obwohl die Fig. 2 lediglich einen Teil des Trockenmittels 130 und einen Teil der elastischen Elemente 140 zeigt, versteht es sich, dass der Innenraum 120 mit dem Trockenmittel 130 und den elastischen Elementen 140 ausgefüllt ist, wie es durch die horizontalen und vertikalen Punkte angedeutet werden soll, wobei Zwischenräume zwischen den Trockenmittelpartikel 130 bzw. den elastischen Elementen 140 frei bleiben und einen Luftdurchlass bieten.

Die Vorspannung wird durch die elastische Deformation der elastischen Elemente 140 bewirkt, wobei die elastischen Elemente 140 auch bei Deformation einen genügenden Zwischenraum freilassen, sodass die eintretende Luft durch die elastischen Elemente 140 leicht zu dem Trockenmittel 130 gelangt. Daran anschließend wird die Luft durch das Trockenmittel 130 gedrückt, wobei die Luftfeuchtigkeit durch das Trockenmittel 130 entzogen wird. Schließlich verlässt die eingelassene Luft den Innenraum 120 über den Auslass 190, wozu an der unteren Begrenzung des Innenraumes 120 Auslassöffnungen 117 vorgesehen sind. Die Auslassöffnungen 117 sind ausgebildet, um das Trockenmittel 130 zurückzuhalten, während die eingeströmte Luft ohne Probleme den Innenraum 120 verlassen kann.

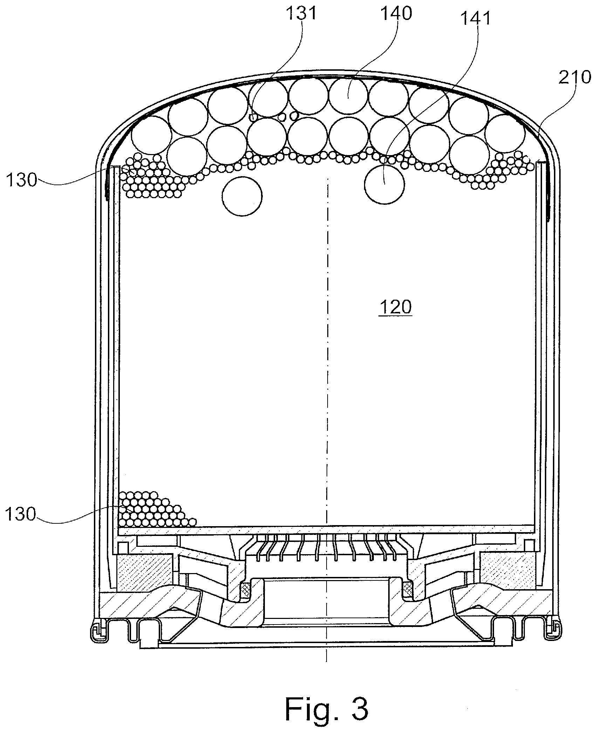

Fig. 3 zeigt ein weiteres Ausführungsbeispiel für eine Trockenmittelpatrone 100, wobei optional zwischen den elastischen Elementen 140 und dem äußeren Gehäuse 110b ein Abdeckelement 210 vorgesehen ist. Das elastische Abdeckelement 210 ist insbesondere für die Herstellung vorteilhaft. Beispielsweise können das Trockenmittel 130 und die elastischen Elemente 140 zusammen in dem Innenraum 120 vor dem Zusammendrücken des Außengehäuses 110b und des Innengehäuses 110a einen Berg bilden. Das Abdeckelement 210 kann die elastischen Elemente 140 und das Trockenmittels 130 halten, sodass sie nicht herausfallen können, während durch das Zusammendrücken des Innen- und Außengehäuses 110a,b die Vorspannung erzeugt wird.

Optional kann das Abdeckelement 210 beispielsweise aus einem elastischen luftdurchlässigen Tuch, ähnlich einem Nylonstrumpf, gefertigt werden, sodass es als einfache Montagehilfe genutzte werden kann.

Gemäß dem Ausführungsbeispiel der Fig. 3 sind die elastischen Elemente 140 und das Trockenmittel 130 teilweise miteinander vermischt, so dass ein Teil der elastischen Elemente 141 innerhalb des Trockenmittels 130 angeordnet ist. In der gleichen Weise kann sich ein Teil des Trockenmittels 131 ebenfalls in Zwischenräumen zwischen den elastischen Elementen 140 befinden.

Obwohl die Fig. 3 lediglich einen Teil des Trockenmittels 130 und einen Teil der elastischen Elemente 140 zeigt, versteht es sich, dass der Innenraum 120 mit dem Trockenmittel 130 und den elastischen Elementen 140 ausgefüllt sein kann, wie es auch durch die horizontalen und vertikalen Punkte angedeutet ist.

Bei weiteren Ausführungsbeispielen sind die elastischen Elemente 140 mit dem Trockenmittel 130 vermischt. Die Vermischung kann vollständig vorliegen oder kann sich nur auf einen Teil des Innenraumes 120 beschränken. Beispielsweise kann eine Mischung nur im oberen Teil oder nur im unteren Teil des Innenraumes 120 vorliegen.

In einem weiteren Ausführungsbeispiel sind die elastischen Elemente 140 vollständig von den Trockenmittel 130 getrennt. Die Trennung kann mittels eines Trennelements erfolgen. Das Trennelement kann beispielsweise das Trockenmittel 130 von den elastischen Elementen 140 derart trennen, dass die elastischen Elemente 140 lediglich in einem Bereich angeordnet sind, in welchem die einströmende Luft zunächst in den Innenraum 120 gelangt. Dies bietet den Vorteil, dass die einströmende Luft zuerst die elastischen Elemente 140 passiert. Wenn gleichzeitig die elastischen Elemente 140 ein Material aufweisen, welches eine Vorfilterung durchführt, können die elastischen Elemente 140 somit die Funktion eines Vorfilters erfüllen. Das Trennelement sollte ausreichend luftdurchlässig sein, um den Luftstrom nicht zu behindern und den Arbeitsdruck für die Trockenmittelpatrone 100 nicht zu erhöhen.

In weiteren Ausführungsbeispielen weisen die elastischen Elemente 140 eine solche Form auf, die verhindert, dass die elastischen Elemente 140 in einem Abschnitt des Luftströmungspfades 105 zwischen dem Innengehäuse 110a und dem Außengehäuse 110b gelangen können (z.B. in den Zwischenkanal 113).

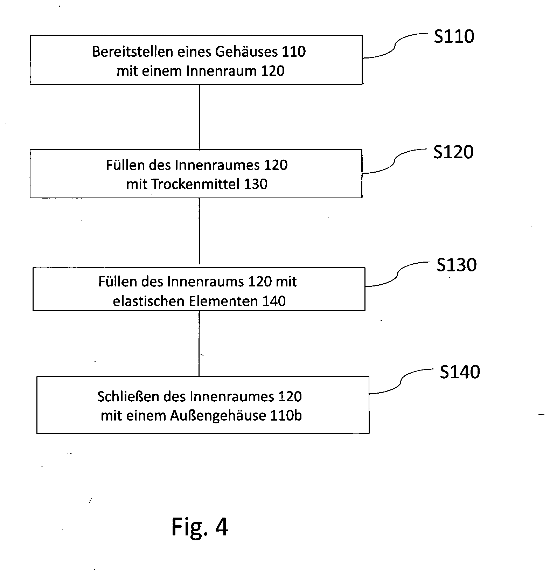

Fig. 4 zeigt ein Flussdiagramm für ein Verfahren zum Herstellen einer Trockenmittelpatrone. Das Verfahren umfasst die Schritte: Bereitstellen S110 eines Gehäuses mit einem Innenraum 120; Füllen S120 des Innenraums 120 mit dem Trockenmittel 130; Füllen S130 des Innenraums 120 mit elastischen Elementen 140 und Schließen S140 des Innenraums 120 mit einem Außengehäuse 110b. Das Füllen S120 des Innenraums 120 mit elastischen Elementen 140 kann derart ausgeführt werden, dass beim Schließen mit dem Außengehäuse 110b ein Druck auf die elastischen Elemente 140 ausgeübt wird, so dass das Trockenmittel 130 zusammen mit den elastischen Elementen 140 unter Vorspannung sich in dem Innenraum 120 befindet.

Bei weiteren Ausführungsbeispielen umfassen die Schritte des Füllens S120 des Innenraums 120 mit dem Trockenmittel 130 und/oder des Füllens S130 des Innenraums 120 mit elastischen Elementen 140 einen Schritt des Bereitstellens eines luftdurchlässigen Abdeckelement 210, wobei das luftdurchlässige Abdeckelement 210 in Kontakt steht zu dem Innengehäuse 110a, sodass vor dem Anbringen des Außengehäuses 110b das luftdurchlässige Abdeckelement 210 einen Halt für zumindest einen Teil der elastischen Elemente 140 und des Trockenmittels 130 gibt. Dies vereinfacht die Herstellung, da das Herausfallen verhindert wird.

Optional weisen die elastischen Elemente 140 selbst Hohlräume (Innenräume) auf, und der Schritt des Schließens des Innenraumes 120 mit einem Deckel (Außengehäuse 110b) kann derart ausgeführt werden, dass zumindest ein Teil der elastischen Elemente 140 beim Schließen sich öffnen, wenn der Druck in den Hohlräumen oberhalb eines Grenzdruckes liegt und die elastischen Elemente 140 platzen. Damit kann eine Obergrenze für die Vorspannung in dem Innenraum definiert werden.

Ausführungsbeispiele der vorliegenden Erfindung weisen die folgenden Vorteile auf.

Ein Vorteil besteht darin, dass im Vergleich zu der konventionellen Trockenmittelpatrone (siehe Fig. 5) keine Feder erforderlich ist, um die erforderliche Vorspannung zwischen dem Trockenmittel in dem Innenraum 120 der Trockenmittelpatrone 100 zu bewirken. Dies führt zu einer Kosteneinsparung bei der Herstellung der Trockenmittelpatrone 100.

Außerdem ist es möglich, das mehr Trockenmittel 130 auf einem gleichen Bauraum (Innenraum 120) untergebracht werden kann, da das Trockenmittel einen "Berg" haben kann und den Innenraum vollständig ausfüllt (bzw. bis auf die elastischen Elemente 140 und vorhandenen Zwischenräumen). Ferner ist es möglich, dass die elastischen Elemente 140 gleichzeitig genutzt werden können, um eine Vorfilterfunktion durchzuführen. Somit hätten die elastischen Elemente 140 nicht nur die Funktion eine Vorspannung zu erzeugen, sondern könnten gleichzeitig eine Vorfilterung durchführen, um beispielsweise Verunreinigungen in der Luft bzw. Ölrückstände zu entfernen.

Ferner ist es bei weiteren Ausführungsbeispielen möglich, dass die elastischen Elemente 140 hydrophile elastische Kügelchen sind, die ausgebildet sind, um eine Vorspannung beim Betrieb der Trockenmittelpatrone 100 zu erhöhen. Bei weiteren Ausführungsbeispielen ist die Einströmfläche für die Luft durch die elastischen Elemente 140 nicht signifikant reduziert. Dies kann beispielsweise durch die Größe oder Form der elastischen Elemente 140 sichergestellt werden, sodass sie genügend große Zwischenräume freilassen (z.B. größer gewählt sind als die Trockenmittelteilchen 130) und die Luft ohne größere Hindernisse zwischen den elastischen Elementen 140 hindurchströmen kann und so, ohne einem erhöhten Widerstand ausgesetzt zu sein, zu dem Trockenmittel 130 gelangt.

Optional ist das luftdurchlässige Abdeckelement als ein (interner) Deckel ausgebildet, der sich innerhalb des äußeren Gehäuses 110b befindet. Es ist ebenfalls möglich, dass anderes Füllmaterial für die elastischen Elemente genutzt wird, wenn es einen ausreichend lichten Strömungsquerschnitt bietet. In weiteren Ausführungsbeispielen werden vorgepackte Pakete von elastischen Elementen 140 genutzt werden. Zum Beispiel können mehrere elastische Elemente 140 miteinander verbunden sein (z. B. über eine elastische Folie), oder mehrere elastische Elemente 140 sind in einem Beutel angeordnet, der auf das Trockenmittel gelegt wird.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### Liste von Bezugszeichen

- 100: Trockenmittelpatrone
- 105: Luftströmungspfad
- 110: Gehäuse
- 110a: Innengehäuse
- 110b: Außengehäuse
- 112: Unterbau
- 113: Zwischenkanal
- 117: Auslassöffnungen
- 120: Innenraum
- 130: Trockenmittel
- 140: elastische Elemente
- 175: Filtereinheit
- 170: Einlass
- 190: Auslass
- 210: Abdeckelement
- 510a: Innengehäuse
- 510b: Außengehäuse
- 512: Unterbau
- 520: Innenraum
- 535: Fixierungsmittel
- 540: Trockenmittel
- 575: Filtereinheit
- 570: Einlassöffnungen
- 590: Auslass
- 580: Seitenkanal
- 560: Feder
- 550: Abdeckplatte

## Patentansprüche

1. Trockenmittelpatrone (100) zum Trocknen von Luft, mit folgenden Merkmalen:
ein Gehäuse (110), das einen Innenraum (120) bildet, wobei das Gehäuse (110) ein Innengehäuse (110a) und ein Außengehäuse (110b) umfasst;
Trockenmittel (130), welches den Innenraum (120) unvollständig ausfüllt und einen Teil des Innenraumes (120) freilässt,
**gekennzeichnet durch**
elastische Elemente (140), die den freigelassenen Teil des Innenraums (120) derart füllen, dass das Trockenmittel (130) unter einer Vorspannung sich im Innenraum (120) befindet; und
ein luftdurchlässiges Abdeckelement (210), das zwischen dem Außengehäuse (100b) und den elastischen Elementen (140) derart angeordnet ist, dass bei einem Entfernen des Außengehäuses (110b) das luftdurchlässige Abdeckelement (210) für zumindest einem Teil der elastischen Elemente (140) und des Trockenmittels (130) Halt bietet, sodass der Teil der elastischen Elemente (140) und des Trockenmittels (130) in dem Innenraum (120) verbleibt,
und das Innengehäuse (110a) und das Außengehäuse (110b) unter Spannung aneinander fixiert sind und die Vorspannung durch die elastischen Elemente (140) verursacht ist.

2. Trockenmittelpatrone (100) nach Anspruch 1, wobei die elastischen Elemente (140) mit dem Trockenmittel (130) zumindest teilweise vermischt sind.

3. Trockenmittelpatrone (100) nach Anspruch 1 oder Anspruch 2, wobei das Abdeckelement (210) an einer Innenwand oder Außenwand des Innengehäuses (110a) anliegt und durch ein elastisches Gewebe oder Tuch gebildet ist.

4. Trockenmittelpatrone (100) nach einem der vorhergehenden Ansprüche, wobei zumindest einige der elastischen Elemente (140) Hohlräume aufweisen und in zumindest einigen der Hohlräume ein Druck oberhalb eines Umgebungsdruckes herrscht, um die Vorspannung zu liefern, wobei die Hohlräume als Kunststoffblasen ausgebildet sind, die beim Zusammensetzen des Innengehäuses und des Außengehäuses deformieren und so die Vorspannung liefern.

5. Trockenmittelpatrone (100) nach einem der vorhergehenden Ansprüche, wobei die elastischen Elemente (140) ein Schaumstoffmaterial aufweisen.

6. Trockenmittelpatrone (100) nach einem der vorhergehenden Ansprüche, wobei die elastischen Elemente (140) ein hydrophiles Material aufweisen.

7. Trockenmittelpatrone (100) nach einem der vorhergehenden Ansprüche, wobei zumindest ein Luftströmungspfad (105) in der Trockenmittelpatrone (100) zum Trocknen der Luft ausgebildet ist, wobei der Luftströmungspfad (105) einen ersten Abschnitt (105a) durch die elastischen Elemente (140) und einen zweiten Abschnitt (105b) durch das Trockenmittel (130) umfasst, und die elastischen Elemente (140) eine Größe oder Form aufweisen, die derart gewählt ist, dass ein Strömungsquerschnitt für die Luft entlang des ersten Abschnittes (105a) gleich oder größer ist als ein Strömungsquerschnitt für die Luft entlang des zweiten Abschnittes (105b).

8. Trockenmittelpatrone (100) nach einem der vorhergehenden Ansprüche, wobei zumindest ein Teil der elastischen Elemente (140) durch ein Packungsmaterial miteinander verpackt ist.

9. Trockenmittelpatrone (100) nach einem der vorhergehenden Ansprüche, die weiter ein luftdurchlässiges Trennelement aufweist, welches das Trockenmittel (130) von den elastischen Elementen (140) trennt.

10. Verfahren zum Herstellen einer Trockenmittelpatrone (100), mit folgenden Schritten:
Bereitstellen eines Innengehäuses (110a) und eines Außengehäuses (110b), wobei das Innengehäuse einen Innenraum (120) bildet;
Füllen des Innenraumes (120) mit einem Trockenmittel (130);
Füllen des Innenraumes (120) mit elastischen Elementen (140); und
Schließen des Innenraumes (120) mit dem Außengehäuse (110b), wobei das Füllen des Innenraumes (120) mit elastischen Elementen (140) derart ausgeführt wird, dass beim Schließen mit dem Außengehäuse (110b) ein Druck auf die elastischen Elemente (140) ausgeübt wird, so dass das Trockenmittel (130) zusammen mit den elastischen Elementen (140) unter einer Vorspannung sich in dem Innenraum (120) befindet,
**gekennzeichnet durch**
Anordnen eines luftdurchlässigen Abdeckelementes (210) zwischen dem Außengehäuse (100b) und den elastischen Elementen (140), so dass bei einem Entfernen des Außengehäuses (110b) das luftdurchlässige Abdeckelement (210) für zumindest einem Teil der elastischen Elemente (140) und des Trockenmittels (130) Halt bietet und der Teil der elastischen Elemente (140) und des Trockenmittels (130) in dem Innenraum (120) verbleibt.

11. Verfahren nach Anspruch 10, wobei der Schritt des Füllens des Innenraumes (120) mit Trockenmittel (130) und/oder mit elastischen Mitteln (140) ein Bilden eines Berges umfasst, der sich aus dem Innenraum (120) heraus erhebt, wobei das Verfahren weiter folgenden Schritt umfasst:
Abdecken des Berges von Trockenmittel (130) und/oder von elastischen Elementen (140) mit dem Abdeckelement (210), sodass das Trockenmittel (130) und/oder die elastischen Elementen (140) im Innenraum (120) gehalten werden, während der Innenraum (120) mit dem Außengehäuse (110b) verschlossen wird.

## Claims

1. A desiccant cartridge (100) for drying air having the following features:
a housing (110) that forms an interior space (120), this housing (110) comprising an inner housing (110a) and an outer housing (110b);
desiccant (130) that incompletely fills the interior space (120) and leaves a part of the interior space (120) free,
**characterised by**
elastic elements (140) that fill the free part of the interior space (120) such that the desiccant (130) located in the interior space (120) is pre-tensioned; and
an air-permeable cover element (210) that is arranged between the outer housing (110b) and the elastic elements (14) such that when the outer housing (110b) is removed the air-permeable cover element (210) holds at least a part of the elastic elements (140) and of the desiccant (130) in place such that the part of the elastic elements (140) and of the desiccant (13) remains in the interior space (120),
and the inner housing (110a) and the outer housing (110b) are fixed to one another under tension and the pre-tension is caused by the elastic element (140).

2. A desiccant cartridge (100) according to claim 1, the elastic elements (140) being at least partially mixed with the desiccant (130).

3. A desiccant cartridge (100) according to claim 1 or claim 2, the cover element (201) being in contact with an inner wall or an outer wall of the inner housing (110a) and taking the form of an elastic textile or cloth.

4. A desiccant cartridge (100) according to any one of the preceding claims, at least some of the elastic elements (140) having cavities and a pressure above the ambient pressure prevailing in at least some of these cavities in order to supply the pre-tensioning, the cavities taking the form of plastic bubbles that deform when the inner housing and the outer housing are assembled and so supply the pre-tensioning.

5. A desiccant cartridge (100) according to any one of the preceding claims, the elastic elements (140) being made of a foam material.

6. A desiccant cartridge (100) according to any one of the preceding claims, the elastic elements (140) being made of a hydrophilic material.

7. A desiccant cartridge (100) according to any one of the preceding claims, there being formed in the desiccant cartridge (100) at least one air flow path (105) to dry the air, this air flow path (105) comprising a first section (105a) through the elastic elements (140) and a second section (105b) through the desiccant (130), and the size and shape of the elastic elements (140) being selected such that a flow cross section for the air along the first section (105a) is equal to or greater than a flow cross section for the air along the second section (105b).

8. A desiccant cartridge (100) according to any one of the preceding claims, at least a part of the elastic elements (140) being packed together by a packing material.

9. A desiccant cartridge (100) according to any one of the preceding claims that also has an air-permeable separating element that separates the desiccant (130) from the elastic elements (140).

10. A method for the production of a desiccant cartridge (100) comprising the following steps:
the provision of an inner housing (110a) and an outer housing (110b), the inner housing (110a) forming an interior space (120);
the filling of the interior space (120) with a desiccant (130);
the filling of the interior space (120) with elastic elements (140); and
the closing of the interior space (120) with the outer housing (110b), the interior space (120) being filled with elastic elements (140) such that when it is closed with the outer housing (110b) a pressure is exerted on the elastic elements (140) such that both the desiccant (130) and the elastic elements (140) in the interior space (120) are pre-tensioned,
**characterised by**
the arrangement of an air-permeable cover element (210) between the outer housing (110b) and the elastic elements (140) such that when the outer housing (110b) is removed the air-permeable cover element (210) holds at least a part of the elastic elements (140) and of the desiccant (130) in place and this part of the elastic elements (140) and of the desiccant (130) remains in the interior space (120)

11. A method according to claim 10, the step entailing the filling of the interior space (120) with desiccant (130) and/or with elastic elements (140) comprises the formation of a mountain that emerges from the interior space (120), this method also comprising the following additional step:
the covering of the mountain of desiccant (130) and/or of elastic elements (140) with the cover element (21) such that the desiccant (130) and/or elastic elements (140) are held in the interior space (120) while the interior space (120) is closed by the outer housing (110b).

## Revendications

1. Cartouche (100) d'agent dessiccateur pour sécher de l'air ayant les caractéristiques suivantes :
un boîtier (110) qui forme un espace (120) intérieur, le boîtier (110) comprenant un boîtier (110a) intérieur et un boîtier (110b) extérieur ;
de l'agent (130) dessiccateur, qui remplit incomplètement l'espace (120) intérieur et laisse libre une partie de l'espace (120) intérieur,
**caractérisée par**
des éléments (140) élastiques qui remplissent la partie laissée libre de l'espace (120) intérieur, de manière à ce que l'agent (130) dessiccateur se trouve sous une précontrainte dans l'espace (120) intérieur; et
un élément (210) de recouvrement disposé entre le boîtier (102) extérieur et les éléments (140) élastiques, de manière à ce que, lorsque le boîtier (110b) extérieur est retiré, l'élément (120) de recouvrement perméable à l'air offre un arrêt à au moins une partie des éléments (140) élastiques et de l'agent (130) dessiccateur, de sorte que la partie des éléments (140) élastiques et de l'agent (130) dessiccateur reste dans l'espace (120) intérieur,
et le boîtier (110a) intérieur et le boîtier (110b) extérieur sont immobilisés sous contrainte l'un par rapport à l'autre et la précontrainte est provoquée par les éléments (140) élastiques.

2. Cartouche (100) d'agent dessiccateur suivant la revendication 1, dans laquelle les éléments (140) élastiques sont mélangés au moins en partie à l'agent (130) dessiccateur.

3. Cartouche (100) d'agent dessiccateur suivant la revendication 1 ou revendication 2, dans laquelle l'élément (210) de recouvrement s'applique à une paroi intérieure ou à une paroi extérieure du boîtier (110a) intérieur et est formé par une étoffe ou un drap élastique.

4. Cartouche (100) d'agent dessiccateur suivant l'une des revendications précédentes, dans laquelle au moins certains des éléments (140) élastiques ont des cavités et il règne dans au moins certaines des cavités une pression supérieure à la pression atmosphérique, pour donner la précontrainte, les cavités étant constituées sous la forme de bulles en matière plastique qui, lors de l'assemblage du boîtier intérieur et du boîtier extérieur, se déforment et donnent ainsi la précontrainte.

5. Cartouche (100) d'agent dessiccateur suivant l'une des revendications précédentes, dans laquelle les éléments (140) élastiques ont une matière alvéolaire.

6. Cartouche (100) d'agent dessiccateur suivant l'une des revendications précédentes, dans laquelle les éléments (140) élastiques ont une matière hydrophile.

7. Cartouche (100) d'agent dessiccateur suivant l'une des revendications précédentes, dans laquelle au moins un trajet (105) de passage de l'air est constitué dans la cartouche (100) de dessiccateur d'air pour sécher l'air, le trajet (105) de passage de l'air comprenant une première partie (105a) dans les éléments (140) élastiques et une deuxième partie (105b) dans l'agent (130) dessiccateur, et les éléments (140) élastiques ont une dimension ou une forme choisies, de manière à ce qu'une section transversale de passage de l'air dans la première partie (105a) soit supérieure ou égale à la section transversale de passage de l'air dans la deuxième partie (105b).

8. Cartouche (100) d'agent dessiccateur suivant l'une des revendications précédentes, dans laquelle au moins une partie des éléments (140) élastiques sont tassés entre eux par un matériau de tassement.

9. Cartouche (100) d'agent dessiccateur suivant l'une des revendications précédentes, qui a en outre une cloison perméable à l'air, qui sépare l'agent (130) dessiccateur des éléments (140) élastiques.

10. Procédé de fabrication d'une cartouche (100) d'agent dessiccateur, comprenant les stades suivants :
on se procure un boîtier (110a) intérieur et un boîtier (110b) extérieur, le boîtier intérieur formant un espace (120) intérieur ;
on remplit l'espace (120) intérieur d'un agent (130) dessiccateur ;
on remplit l'espace (120) intérieur d'éléments (140) élastiques ; et
on ferme l'espace (120) intérieur par le boîtier (110b) extérieur, le remplissage de l'espace (120) intérieur par les éléments (140) élastiques étant réalisé de manière à appliquer, à la fermeture par le boîtier (110b) extérieur, une pression sur les éléments (140) élastiques, de manière à ce que l'agent (130) dessiccateur, ensemble avec les éléments (140) élastiques, se trouve sous une précontrainte dans l'espace (120) intérieur,
**caractérisé en ce que**
on met un élément (210) de recouvrement perméable à l'air entre le boîtier (100b) extérieur et les éléments (140) élastiques, de manière à ce que, lorsque l'on retire le boîtier (110b) extérieur, l'élément (210) de recouvrement perméable à l'air offre un arrêt à au moins une partie des éléments (140) élastiques et de l'agent (130) dessiccateur et à ce que la partie des éléments (140) élastiques et de l'agent (130) dessiccateur reste dans l'espace (120) intérieur.

11. Procédé suivant la revendication 10, dans lequel le stade de remplissage de l'espace (120) intérieur par de l'agent (130) dessiccateur et/ou par des éléments (140) élastiques comprend la formation d'un monticule qui s'élève hors de l'espace (120) intérieur, le procédé comprenant en outre le stade suivant :
recouvrement du monticule d'agent (130) dessiccateur et/ou d'éléments (140) élastiques par l'élément (210) de recouvrement, de manière à maintenir l'agent (130) dessiccateur et/ou les éléments (140) élastiques dans l'espace (120) intérieur, pendant que l'espace (120) intérieur est fermé par le boîtier (100b) extérieur.
